# EUROPEAN PATENT APPLICATION

(11) **EP 1 905 797 A1**
(43) Date of publication of application: **02.04.2008**
(21) Application number: 06781616.5
(22) Date of filing: 19.07.2006
(51) Int. Cl.: C08J 9/00, B23K 26/00, C08J 9/36, H01B 1/06, H01B 13/00, H01M 8/02, H01M 8/10

(54) **POROUS MEMBRANE, PROCESS FOR PRODUCING POROUS MEMBRANE, SOLID POLYMER ELECTROLYTE MEMBRANE, AND FUEL CELL**

(30) Priority: 19.07.2005 JP 2005208815
(71) Applicant: TOYOTA JIDOSHA KABUSHIKI KAISHA, Toyota-shi, Aichi-ken, 471-8571 (JP)
(72) Inventor: KATAYAMA, Yukihisa c/o Toyota Jidosha Kabushiki, 4718571 (JP)
(74) Representative: Kuhnen & Wacker
(86) International application number: PCT/JP2006/314704
(87) International publication number: WO 2007/011050

(57) **Abstract**

It is intended to provide a porous membrane comprising a film or sheet made of a polymer or inorganic material, **characterized by** having a large number of pores of 0.1 to 100 µm in pore size formed by irradiation with an ultra-short pulse laser with a pulse width of 10⁻⁹ seconds or less at an output power of 0.001 to 10 W at focal position, and to provide a polymer electrolyte membrane having the pores that are filled with a polymer electrolyte. This polymer electrolyte membrane can be prepared as a thin membrane and is highly durable with high strength and a reduced cross-leak of fuel gas. This porous membrane can be used as a solid polymer electrolyte membrane to obtain a fuel cell improved in output voltage and electric current density.

## Description

### Technical Field

The present invention relates to a variety of functional membranes, particularly, an inorganic or organic porous membrane most suitable for a solid polymer electrolyte used in a solid polymer fuel cell, a water electrolysis apparatus, etc., a method for producing the same, and a fuel cell comprising the porous membrane. Particularly, the present invention relates to a porous membrane that can be produced easily on the basis of the design of physical properties from a polymer or inorganic film or sheet having through-holes of 100 µm or smaller, preferably 10 µm or smaller, in pore size, and a method for producing the same. The present invention also relates to a solid polymer electrolyte membrane that exhibits, when used in a fuel cell, excellent durability without breakages attributed to repetitive changes in operational conditions, and a method for producing the same.

### Background Art

Solid polymer electrolyte fuel cells have a structure comprising a solid polymer electrolyte membrane as an electrolyte and electrodes connected to both sides of this membrane.

The polymer solid electrolyte membrane must have low membrane resistance in itself, when used as a fuel cell. Therefore, it is desired that its membrane thickness should be as thin as possible. However, a solid polymer electrolyte membrane with too a thin membrane thickness had such problems that: pinholes occur during membrane production; the membrane is torn or broken during electrode formation; and a short circuit is easily made between the electrodes. Moreover, the polymer solid electrolyte membrane used as a fuel cell is always used in a wet state. Therefore, such a solid polymer electrolyte membrane tends to have reliability problems such as pressure resistance or cross-leaks during differential pressure operation resulting from the swelling, deformation, and the like of the polymer membrane attributed to wetting.

Thus, JP Patent Publication (Kokai) No. 9-194609A (1997) is intended to provide an ion-exchange membrane that has no breakage attributed to repetitive changes in the water content of an ion-exchange resin and resists pinholes by virtue of the mutual tight contact between the ion-exchange resin and a porous membrane of a fluorocarbon resin or the like. This document discloses a method for producing an ion-exchange membrane, comprising: impregnating at least pores of a porous membrane of a fluorocarbon resin or the like produced by drawing with a polymer dissolved in a solvent; attaching the polymer to the porous membrane by drying; and introducing an ion-exchange group thereinto.

Alternatively, JP Patent Publication (Kokai) No. 2004-247123A discloses, as a method for punching fine pores in a polymer material, an approach for producing a porous film, comprising melting a portion of a polymer film with a particular optical absorptance by use of a laser typified by YAG to form through-holes. Specifically, this document is intended to provide a production method by which through-holes are punched to produce a porous substrate for a polymer electrolyte membrane with high precision and efficiency, and to provide a high-performance fuel cell with a stable output power: The document discloses a method for producing a polymer electrolyte membrane, comprising irradiating, with a laser, a substrate with a light beam absorptance of 60% or more at a wavelength of 330 to 500 nm to form through-holes and filling the porous substrate having plural through-holes with a proton conductor.

Alternatively, JP Patent Publication (Kokai) No. 2002-348389A discloses a technique for producing a porous film, comprising irradiating a particular portion of a film with an ion beam for modification and then removing the particular portion with an etching solution to form through-holes in the polymer film. Specifically, this document is intended to provide a fluorine-based polymer ion-exchange membrane having a wide range of ion-exchange capacities, which is highly resistant to oxidation and particularly suitable to a fuel cell. The document discloses a method for producing a fluorine-based polymer ion-exchange membrane, comprising: irradiating a polytetrafluoroethylene membrane with a 5- to 500-kGy radiation of an electron or γ beam at a temperature ranging from 300 to 365°C under a reduced pressure of 10⁻³ to 10 Torr or under an inactive gas atmosphere to produce a long-chain branched polytetrafluoroethylene membrane; irradiating the membrane again with 5 to 500 kGy of an electron or γ beam at room temperature in inactive gas; causing the graft reaction of a hydrofluorovinyl ether monomer at a temperature ranging from -78°C to 100°C or equal to or lower than the boiling point of a solvent under inactive gas to introduce a graft chain from the monomer into the long-chain branched polytetrafluoroethylene membrane; and introducing a sulfonic acid group into this graft chain.

On the other hand, an ultra-short pulse laser with a pulse width of 10⁻⁹ seconds or less has received attention as a laser beam suitable to laser micromachining. Particularly, a femtosecond (fs: 10⁻¹² sec.) pulse laser beam, when used in the machining of a variety of materials such as metal and transparent materials, is characterized by hardly producing thermal and chemical breakages (deformation and alteration) in the neighborhood of a laser beam-irradiated site, totally unlike conventional machining with a CO₂ or YAG laser.

In the conventional laser machining, most of light energy irradiated on a material to be machined is converted to heat energy, and machining through melting, decomposition, and scattering proceeds by this heat. By contrast, when an ultra-short pulse laser is used, energy is concentrated onto a material to be machined in an exceedingly short time. Therefore, nanoplasma, nanoshock, breakdown, lattice strain, and shock waves occur at an ultrahigh speed, and machining through abrasion (scattering) proceeds before heat generation. Thus, machining is probably induced only at the irradiated site and finely achieved without breakages in the neighborhood thereof.

Moreover, the machining of a transparent material using an ultra-short pulse laser beam such as a femtosecond pulse laser proceeds by multiphoton absorption and can therefore three-dimensionally remote-machine only the internal region of the material surface without damages. Furthermore, this machining utilizes non-linear phenomena such as multiphoton absorption and therefore produces resolving power of machining that exceeds the diffraction limit of an irradiation light wavelength, in spite of use of light.

Thus, the laser machining using an ultra-short pulse laser beam such as a femtosecond pulse laser is totally different in machining mechanism from the conventional laser machining. The machining using an ultra-short pulse laser has much higher resolving power and can restrict a machined region to the internal region of a material to be machined. Therefore, this machining can achieve ultra-micromachining technique of submicron or less resolutions far beyond the bounds of common sense of the conventional laser machining.

### Disclosure of the Invention

In techniques for producing a porous membrane having through-holes, a variety of methods have been developed so far, such as drawing, casting, and chemical etching methods. In these approaches, materials cannot easily be changed under the constraints of the production techniques. Therefore, any of these approaches cannot serve as a basic solution from the viewpoint of satisfying wide membrane design requirements. Thus, it has been demanded to develop a technique for producing a porous membrane, by which through-holes can be formed, irrespective of inorganic or organic materials.

In the method disclosed in JP Patent Publication (Kokai) No. 9-194609A (1997), a polymer is hydrophilic, whereas a drawn porous membrane is a hydrophobic. These components are rendered conformable to each other by a solvent. However, a membrane described therein is not made into a highly durable, composite membrane. Thus, there is concern that the electrolyte and PTFE are separated in use.

Moreover, the method disclosed in JP Patent Publication (Kokai) No. 2004-247123A has the problem that (1) the pore size of a porous membrane that can be produced is limited to large sizes. This is because the pore size of through-holes that can be produced is as large as 10 µm to 100 µm. In the conventional micromachining using a laser, it is difficult to reduce the pore size in principle due to a large focal spot size and influences associated with heat (heat transfer, etc.). Moreover, this method had the problem that (2) a porous membrane design range such as membrane strength is narrow. This is because a polymer material that can be used in the film is limited. The conventional machining using a laser has the problem that it cannot create pores in a film having no light absorbability. Moreover, a pigment, even if added for enhancing light absorbability, is possibly eluted in use.

Furthermore, the method disclosed in JP Patent Publication (Kokai) No. 2002-348389A had the problem that (1) this method requires much cost. This is because a huge ion accelerator is necessary for obtaining a heavy ion beam for punching pores. Moreover, the method also has the problem that (2) the number of steps is large. This is because the method cannot punch pores only by ion beam transmission and requires chemical treatment (acid treatment/solvent treatment, etc.) for removing the denatured portion (portion easily eluted due to its low molecular weight).

The present inventor has found that the problems are solved by punching pores by use of an ultra-short pulse laser, and has consequently completed the present invention.

Specifically, a first aspect of the present invention is a porous membrane comprising a film or sheet made of a polymer or inorganic material, characterized by having a large number of pores of 0.1 to 100 µm, preferably 0.1 to 10 µm, in pore size formed by irradiation with an ultra-short pulse laser with a pulse width of 10⁻⁹ seconds or less at an output power of 0.001 to 10 W at focal position. The porous membrane of the present invention can be used as a variety of functional membranes by taking advantage of a large number of pores carried thereby.

In the porous membrane of the present invention, pores having a desired shape can be punched in the polymer or inorganic material by the irradiation energy of the ultra-short pulse laser, while the initial physical properties of the polymer or inorganic material, such as strength can also be maintained. In this context, it is preferred that the pores should penetrate the membrane in light of a variety of applications of the porous membrane of the present invention, which will be described later.

The porous membrane of the present invention can be used in a variety of applications. For using the porous membrane as an electrolyte membrane, particularly, an electrolyte membrane for a fuel cell, the pores must be filled with a polymer electrolyte. The pores on the order of submicron are filled with a polymer electrolyte. Therefore, the porous membrane has the high adhesion between the film or sheet substrate made of a polymer or inorganic material and the polymer electrolyte and exhibits high durability in a variety of applications.

In the present invention, a polymer or inorganic material is used as the film or sheet substrate. A variety of polymer materials known in the art are used as the polymer material. Among them, preferable examples thereof include, but not limited to, polytetrafluoroethylene (PTFE) or a tetrafluoroethylene copolymer comprising 10% by mole or less of a copolymerization component, and polysiloxane having at least one or more group(s) selected from methyl, phenyl, hydrogen, and hydroxyl groups as a substituent.

For using the composite porous membrane of the present invention as an ion-exchange functional membrane, it is preferred that the polymer electrolyte with which the pores are filled should have a sulfonic acid group.

The ultra-short pulse laser used in the present invention is an ultra-short pulse laser with a pulse width of 10⁻⁹ seconds or less. Specific examples thereof include a nanosecond, picosecond, or femtosecond pulse laser.

A second aspect of the present invention is a method for producing the porous membrane, comprising (1) preparing a film or sheet made of a polymer or inorganic material and (2) irradiating the film or sheet with an ultra-short pulse laser with a pulse width of 10⁻⁹ seconds or less at an output power of 0.001 to 10 W at focal position to form a large number of pores of 0.1 to 100 µm, preferably 0.1 to 10 µm, in pore size in the film or sheet.

For using the porous membrane of the present invention as an electrolyte membrane, it is preferred that the method should further comprise (3) filling the pores with an electrolyte-forming monomer and subsequently polymerizing the electrolyte-forming monomer. In this context, the electrolyte-forming monomer may be filled with a cross-linking agent. This can cause cross-linking reaction during polymerization so as to impart strength, solvent resistance, heat resistance, etc., to the electrolyte portions within the pores. Moreover, it is preferred that to fill the pores with the electrolyte-forming monomer and optionally with the cross-linking agent, ultrasonication and/or defoaming treatment should be performed for sufficiently infiltrating the electrolyte-forming monomer and the optional cross-linking agent into the pores.

A method for polymerizing the electrolyte-forming monomer within the pores is not particularly limited. Preferable examples thereof include one or more method(s) selected from photopolymerization, thermal polymerization, and catalyst-initiated polymerization. It is preferred that the selected polymerization method(s) should be performed repetitively. Among them, photopolymerization is preferable in terms of operability.

For using the porous membrane of the present invention as an electrolyte membrane, it is also preferred that the method should comprise (4) filling the pores with a polymer electrolyte, instead of the step (3). Polymer electrolytes known in the art can be used as the polymer electrolyte with which the pores are filled. Among them, a preferable polymer electrolyte is represented by the following general formula (2): 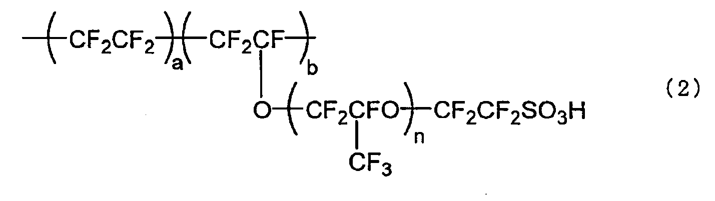 wherein the ratio of the moiety a to the moiety b is a:b=0:1 to 9:1, and n represents 0, 1, or 2.

To fill the pores with the polymer electrolyte, the polymer electrolyte is dissolved without a solvent or in a solvent for filling. For example, a polymer electrolyte solution is used, and the solvent can be evaporated later. It is preferred that the solvent should have a boiling point as high as 90°C to 180°C. Moreover, for filling the pores with the polymer electrolyte, it is effective to perform heating and/or pressurization.

In the present invention, specific examples of the ultra-short pulse laser include a nanosecond, picosecond, or femtosecond pulse laser, as described above.

To irradiate the film or sheet with the ultra-short pulse laser with a pulse width of 10⁻⁹ seconds or less, a holographic exposure method may be used for regularly punching a large number of pores and is therefore preferable as the method for producing a porous membrane according to the present invention.

A third aspect of the present invention is a functional membrane comprising the porous membrane.

A fourth aspect of the present invention is a polymer electrolyte membrane comprising the composite porous membrane.

A fifth aspect of the present invention is a fuel cell comprising the solid polymer electrolyte membrane.

According to the present invention, the thickness of the solid polymer electrolyte membrane can be rendered thin. Moreover, the film or sheet substrate made of a polymer or inorganic material is used as a support of an electrolyte membrane and can therefore reinforce the strength of the electrolyte membrane. Thus, a fuel cell equipped with the solid polymer electrolyte membrane according to the present invention is highly durable and can have a reduced cross-leak of fuel gas and improved current-voltage characteristics.

The present invention produces the following actions or effects:
(1) A porous membrane design range is expanded. The present invention can be applied to a film or sheet made of every polymer or inorganic material. Therefore, a film or sheet substrate made of a polymer or inorganic material having desired physical properties can be used as a reinforcing material. Thus, the physical properties of a membrane, such as membrane strength can be designed in a wider range. Conventional laser machining had limitations of the type and absorbance of a material. This is because pores are machined by the action of a femtosecond laser or the like that decomposes an interatomic bond.
(2) A machinable pore size range is expanded. This is because the ultra-short pulse laser is insusceptible to heat conduction. In conventional techniques, a limit of the minimum pore size is 10 µm. However, the present technique can machine pores up to 0.1 µm in the minimum pore size. In addition, pores with controllable and uniform pore sizes can be formed. This is because the conventional techniques are based on heat melting as machining principles.
(3) The number of steps can be curtailed. This is because pre- and post-treatments are unnecessary. Chemical treatment such as surface treatment is unnecessary for immobilizing an electrolyte material on the film or sheet. This is because the machining using the ultra-short pulse laser is based on principles of decomposing the polymer or inorganic material at an atomic level and therefore, does not require chemical treatment such as etching.
   In addition to them, the following actions or effects can also be expected:
(4) The film or sheet substrate made of a polymer or inorganic material is well impregnated with the polymer electrolyte.
(5) The composite membrane even with a small pore size has high reinforcing effects and therefore can keep mechanical durability.
(6) The polymerization of the electrolyte monomer after impregnation directly produces an aqueous or non-aqueous electrolyte without a solvent.
(7) The polymer electrolyte itself has a sulfonic acid group. Therefore, a procedure for introducing an ion-exchange group into a side chain by hydrolysis can be omitted.
(8) The punched pores have a small pore size. Therefore, the film or sheet substrate made of a polymer or inorganic material has high affinity for the polymer electrolyte and is therefore excellent in strength as a polymer electrolyte membrane.

Moreover, according to the present invention, the film or sheet substrate made of a polymer or inorganic material is used as a support of an electrolyte membrane and can therefore reinforce the strength of the electrolyte membrane. The thickness of a solid polymer electrolyte membrane can be controlled by the thickness of a film or sheet substrate. Therefore, the strength of the electrolyte membrane of the present invention can be reinforced as compared with conventional electrolyte membranes comprising a perfluorocarbon sulfonic acid resin made into a membrane form. As a result, the electrolyte membrane of the present invention can be used even in a small thickness as compared with the conventional electrolytes comprising a perfluorocarbon sulfonic acid resin made into a membrane form.

### Brief Description of the Drawings

Figure 1 shows a laser microscopic observation result on the laser-irradiated side of a PEEK (55 µm in membrane thickness) porous membrane obtained in Example;
Figure 2 shows a laser microscopic observation result on the laser-irradiated side of a PEI (50 µm in membrane thickness) porous membrane obtained in Example;
Figure 3 shows a laser microscopic observation result on the laser-irradiated side of a PSF (60 µm in membrane thickness) porous membrane obtained in Example;
Figure 4 shows a laser microscopic observation result on the laser-irradiated side of a PPSU (25 µm in membrane thickness) porous membrane obtained in Example; and
Figure 5 shows a laser microscopic observation result on the laser-irradiated side and back side of a PPS (55 µm in membrane thickness) porous membrane obtained in Example.

### Best Mode for Carrying Out the Invention

Specific examples of an ultra-short pulse laser with a pulse width of 10⁻⁹ seconds or less that can be used in the present invention include: a pulse laser with a pulse width of 10⁻⁹ seconds or less obtained by regeneration/amplification from a laser whose medium is a titanium-sapphire crystal or from a dye laser; and a pulse laser with a pulse width of 10⁻⁹ seconds or less having a harmonic wave of an excimer or YAG (e.g., Nd-YAG) laser. Particularly, a pulse laser on the order of femtosecond with a pulse width of 10⁻¹² to 10⁻¹⁵ seconds (femtosecond pulse laser) can be used preferably, which is obtained by regeneration/amplification from a laser whose medium is a titanium-sapphire crystal or from a dye laser. Of course, the pulse width of the ultra-short pulse laser is not particularly limited as long as it is 10⁻⁹ seconds or less. For example, the pulse width is on the order of picosecond from 10⁻⁹ seconds to 10⁻¹² seconds or on the order of femtosecond from 10⁻¹² seconds to 10⁻¹⁵ seconds and is usually approximately 100 femtoseconds (10⁻¹³ seconds). The use of such an ultra-short pulse laser such as a pulse laser with a pulse width of 10⁻⁹ seconds or less obtained by regeneration/amplification from a laser whose medium is a titanium-sapphire crystal or from a dye laser, or a pulse laser with a pulse width of 10⁻⁹ seconds or less having a harmonic wave of an excimer or YAG (e.g., Nd-YAG) laser, can produce high pulse energy and therefore achieve laser machining using multiphoton absorption processes. These lasers can permit micromachining in a width narrower than the wavelength by the power thereof. Thus, the laser machining using the ultra-short pulse laser through multiphoton absorption processes can form very small through-holes of 200 µm or smaller in the minimum size or width. The shape of the cross section is not limited to circular or elliptic shape and may be any shape such as a line, curve, or bending line for a longer major axis.

In the present invention, the wavelength of the ultra-short pulse laser is not particularly limited. The wavelength may be a wavelength longer than the absorption wavelength of a film or sheet substrate made of a polymer or inorganic material because of the multiphoton absorption processes used, and can be selected appropriately according to the type or absorption wavelength of the film or sheet substrate. Specifically, the wavelength of the ultra-short pulse laser may be, for example, a wavelength in the range of ultraviolet to near infrared and can thus be selected appropriately from the range of 200 nm to 1000 nm. In this context, it is preferred that the wavelength of the ultra-short pulse laser should be a wavelength that serves as a harmonic (second-harmonic, third-harmonic, etc.) wave of the absorption wavelength (peak wavelength of absorption) of the film or sheet substrate.

Moreover, the repetition rate of the ultra-short pulse laser ranges from 1 Hz to 100 MHz and is usually approximately 10 Hz to 500 kHz.

Energy irradiated per unit volume in the internal region of the film or sheet substrate can be determined appropriately according to the irradiation energy of the ultra-short pulse laser, the numerical aperture (light gathering) of an objective lens used in irradiation on the film or sheet substrate, an irradiation position or the depth of focus on a plastic substrate to be machined, the movement speed of a laser focus, etc.

In the present invention, the average output power or irradiation energy of the ultra-short pulse laser is not particularly limited as long as it is 0.01 W or more. The average output power or irradiation energy can be selected appropriately according to the size, shape, etc. of the pores of interest (particularly, very small through-holes) and can be selected from, for example, 10000 mW or less, preferably the range of approximately 5 to 500 mW, more preferably the range of approximately 10 to 300 mW.

Moreover, the spot size of irradiation of the ultra-short pulse laser is not particularly limited. The spot size can be selected appropriately according to the size or shape of the pores of interest, the size, numeric aperture, or magnification of the lens, etc. and can be selected from, for example, the range of approximately 0.1 to 10 µm.

Not only a polymer material having a single chemical structure (including copolymers) but also a polymer alloy or blend comprising plural polymer materials having different chemical structures can be used as a polymer material used as a film or sheet substrate in the present invention. Alternatively, the polymer film or sheet substrate may be a complex containing other materials such as inorganic compounds or metals in a dispersed state or may be a lamination having a two-layer or more layered structure containing layers comprising different plastics or other materials. For example, when a polymer film or sheet substrate comprising carbon black dispersed therein is used for imparting conductivity to the polymer film or sheet, this polymer film or sheet substrate exhibits enhanced laser light absorption efficiency and also exhibits easily machinable effects.

The polymer film or sheet is made of, preferably, a hydrocarbon-based material (including engineering plastic materials) in terms of cost and may be made of a fluoride-based material. Alternatively, the film or sheet may be made of an inorganic material. Specific examples of the material that can be used include polyether ketone ketone (PEKK), polyether ether ketone (PEEK), polyether imide (PEI), polyimide (PI), PAI, polyphenylene sulfide (PPS), PPSU, PAR, PBI, PA, polyphenylene ether (PPO), polycarbonate (PC), PP, polyether sulfone (PES), PVDC, PSF, PAN, polyethylene terephthalate (PET), polyethylene (PE), high-density polyethylene (HDPE), polytetrafluoroethylene (PTFE), PVDF, and SiO₂.

Further examples thereof include, but not limited to, resins (e.g., thermoplastic resins) including: methacrylate-based resins such as polymethyl methacrylate (PMMA); styrene-based resins such as polystyrene, acrylonitrile-styrene copolymers (AS resins), and acrylonitrile-butadiene-styrene copolymers (ABS resins); polyamide; polyamide-imide; polyesterimide; polyacetal; polyarylate; polyaryl; polysulfone; polyurethanes; polyether ketones; polyacrylic acid esters such as butyl polyacrylate and ethyl polyacrylate; polyvinyl esters such as polybutoxymethylene; polysiloxanes; polysulfides; polyphosphazenes; polytriazines; polycarboranes; polynorbomene; epoxy-based resins; polyvinyl alcohol; polyvinylpyrrolidone; polydienes such as polyisoprene and polybutadiene; polyalkenes such as polyisobutylene; fluorine-based resins such as vinylidene fluoride-based resins, hexafluoropropylene-based resins, hexafluoroacetone-based resins, and polytetrafluoroethylene resins; polyolefin resins such as polyethylene, polypropylene, and ethylene-propylene copolymers.

These film or sheet substrates can be selected appropriately according to the applications of a composite porous membrane having pores. For example, fluorine-based or olefin-based resins can be used preferably in applications such as a filter or separator in consideration of chemical stability, etc.

The thickness of the polymer film or sheet substrate is not particularly limited. The thickness can be selected appropriately according to the applications of the porous membrane having pores and may be, for example, 0.1 µm or larger (e.g., 0.1 µm to 10 mm). When the substrate is a plastic film, laser machining using multiphoton absorption processes produces a plastic film having pores. In the present invention, laser machining can be performed with excellent precision for a substrate to be machined, even if the substrate to be machined is a polymer film (i.e., even if its thickness is thin). When the substrate to be machined is a polymer film, its thickness may be, for example, 0.1 to 500 µm, preferably 1 to 300 µm, more preferably 10 to 150 µm.

A variety of electrolyte-forming monomers known in the art can be used as an electrolyte-forming monomer used in the present invention. Preferable examples thereof include, but not limited to, compounds having a strong acid group such as a sulfonic acid group in the chemical structure, that is, vinylsulfonic acid, vinylphosphonic acid, allylsulfonic acid, allylphosphonic acid, styrenesulfonic acid, and styrenephosphonic acid.

Moreover, the present invention encompasses not only the monomers themselves having an ionic functional group but also monomers having a group that is converted to an ionic functional group through reaction at a post-process. For example, in the present invention, the porous membrane is produced by impregnating the polymer film or sheet substrate with the electrolyte-forming monomer, which is in turn polymerized to convert a sulfonyl halide [-SO₂X¹], sulfonic acid ester [-SO₃R¹], or halogen [-X₂] group within the molecular chain to a sulfonic acid [-SO₃H] group. Alternatively, the porous membrane is produced by using chlorosulfonic acid to introduce a sulfonic acid group into, for example, a phenyl, ketone, or ether group present in the electrolyte-forming monomer unit present in the polymer film or sheet substrate.

In the present invention, typical examples of the electrolyte-forming monomer include the following monomers shown in (1) to (6):
(1) one or more monomer(s) selected from the group consisting of monomers having a sulfonyl halide group, that is, CF₂=CF(SO₂X¹) (wherein X¹ represents a halogen group -F or - Cl; hereinafter, the same holds true), CH₂=CF(SO₂X¹), and CF₂=CF(OCH₂(CF₂)ₘSO₂X¹) (wherein m represents any of 1 to 4; hereinafter, the same holds true);
(2) one or more monomer(s) selected from the group consisting of monomers having a sulfonic acid ester group, that is, CF₂=CF(SO₃R¹) (wherein R¹ represents an alkyl group -CH₃, -C₂H₅, or -C(CH₃)₃; hereinafter, the same holds true), CH₂=CF(SO₃R¹), and CF₂=CF(OCH₂(CF₂)ₘSO₃R¹);
(3) one or more monomer(s) selected from the group consisting of CF₂=CF(O(CH₂)ₘX²) (wherein X² represents a halogen group -Br or -Cl; hereinafter, the same holds true) and CF₂=CF(OCH₂(CF₂)ₘX²);
(4) one or more monomer(s) selected from the group consisting of acrylic monomers, that is, CF₂=CR²(COOR³) (wherein R² represents -CH₃ or -F, and R³ represents -H, -CH₃, -C₂H₅, or - C(CH₃)₃; hereinafter, the same holds true) and CH₂=CR²(COOR³);
(5) one or more monomer(s) selected from the group consisting of styrene or styrene derivative monomers, that is, 2,4-dimethylstyrene, vinyltoluene, and 4-tert-butylstyrene; and
(6) one or more monomer(s) selected from the group consisting of acetylnaphthylene, vinyl ketone CH₂=CH(COR⁴) (wherein R⁴ represents -CH₃, -C₂H₅, or a phenyl group (-C⁶H₅)), and vinyl ether CH₂=CH(OR⁵) (wherein R⁵ represents -CₙH₂ₙ₊₁ (n=any of 1 to 5), -CH(CH₃)₂, - C(CH₃)₃, or a phenyl group).

Specific examples of a cross-linking agent optionally used for the electrolyte-forming monomer in the present invention include divinylbenzene, triallyl cyanurate, triallyl isocyanurate, 3,5-bis(trifluorovinyl)phenol, and 3,5-bis(trifluorovinyloxy)phenol. One or more of these cross-linking agents is added for cross-linking and polymerization in an amount of 30% by mole or less with respect to the total monomer amount.

In the present invention, the porous membrane may be subjected to surface treatment using drug solutions, plasma, radiation, or the like to introduce a functional group into the surface of the porous membrane. Alternatively, the functional group thus introduced and the electrolyte-forming monomer may be bonded directly or via the cross-linking group.

The porous membrane having pores of the present invention has precisely controlled pores in the surface or internal region and can therefore effectively exert a variety of functions by taking advantage of the precisely controlled and formed pores. Particularly, when the porous membrane having pores has very small through-holes, this porous membrane can exert, for example, filter, membrane, separator, atomization, gas diffusion, nozzle, and flow channel adjustment functions.

Examples of specific applications in which the porous membrane having pores of the present invention can be used include: micromachines, microsensors, biological instruments, microreactor chips, and implantable artificial organs, which exploit their spacer functions forming precise spaces, flow channels, etc.; and a variety of functional members such as microfilters, microfiltration membranes (micromembranes), separators for a cell (e.g., separators for a cell utilized in a variety of cells such as nickel hydride batteries and lithium-ion cells), members for a fuel cell (e.g., a variety of members used in a fuel cell, such as gas diffusion, current collection, moisture permeable, and moisture retention layers), micronozzles (e.g., micronozzles for printers, for injection, for spraying, and for gaps), distributors, gas diffusion layers, and microchannels.

When the composite porous membrane having pores of the present invention is used in a fuel cell, the thickness of the solid polymer electrolyte membrane can be rendered thin. Moreover, the film or sheet substrate made of a polymer or inorganic material is used as a support of an electrolyte membrane and can therefore reinforce the strength of the electrolyte membrane. Thus, the fuel cell equipped with the solid polymer electrolyte membrane according to the present invention is highly durable and can have a reduced cross-leak of fuel gas and improved current-voltage characteristics.

### Example

Hereinafter, Example of the present invention will be shown.

Each of films of PEEK, PEI, and PSF manufactured by Sankyo Kasei Co., Ltd., PPSU manufactured by Solvay, and PPS manufactured by Toray Industries, Inc. was irradiated with a laser with a pulse width of 150 fs at an output power of 0.03 W at focal position for 0.01 sec. to 1.0 sec. to form porous films having through-holes of 5 to 30 µm in diameter.

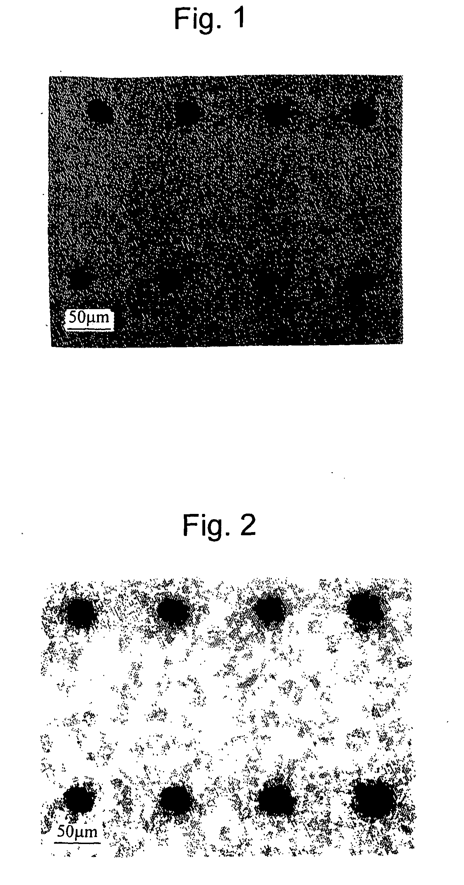

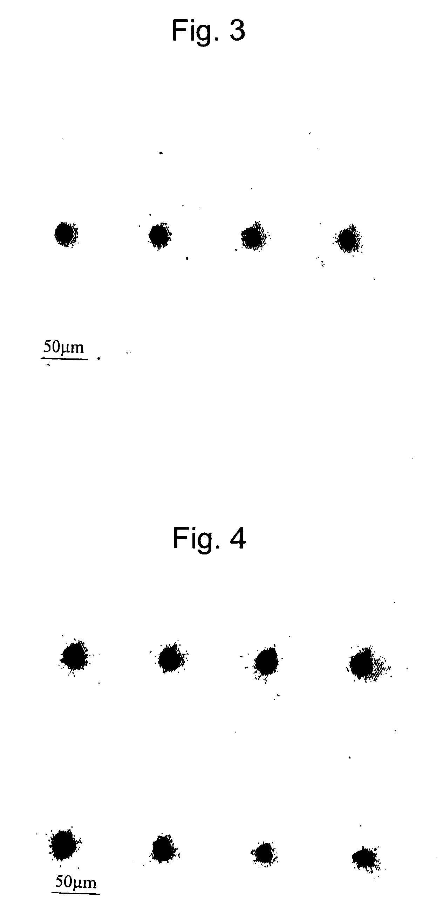

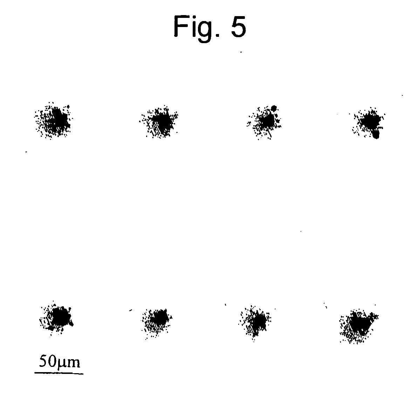

Figures 1 to 5 respectively show an example of a laser microscopic observation result on the front and back sides of each porous membrane. Figure 1 shows the laser-irradiated side of PEEK (55 µm in membrane thickness) obtained in Example, wherein the upper row denotes irradiation times of 0.01 sec. to 0.04 sec. (in increments of 0.01 sec.) from the left, and the lower row denotes focal lengths of 0 mm to 0.15 mm (in increments of 0.05 mm) from the left. Figure 2 shows the laser-irradiated side of PEI (50 µm in membrane thickness) obtained in Example, wherein the upper row denotes irradiation times of 0.01 sec. to 0.04 sec. (in increments of 0.01 sec.) from the left, and the lower row denotes focal lengths of 0 mm to 0.15 mm (in increments of 0.05 mm) from the left. Figure 3 shows the laser-irradiated side of PSF (60 µm in membrane thickness) obtained in Example, wherein the row denotes irradiation times of 0.01 sec. to 0.04 sec. (in increments of 0.01 sec.) from the left. Figure 4 shows the laser-irradiated side of PPSU (25 µm in membrane thickness) obtained in Example, wherein the upper row denotes irradiation times of 0.01 sec. to 0.04 sec. (in increments of 0.01 sec.) from the left, and the lower row denotes focal lengths of 0 mm to 0.15 mm (in increments of 0.05 mm) from the left. Figure 5 shows the laser-irradiated side and back side of PPS (55 µm in membrane thickness) obtained in Example, wherein the upper row denotes irradiation times of 0.01 sec. to 0.04 sec. (in increments of 0.01 sec.) from the left, and the lower row denotes focal lengths of 0 mm to 0.15 mm (in increments of 0.05 mm) from the left.

Moreover, the obtained PEEK porous film was used to produce a prototype of an electrolyte membrane for a fuel cell. ATBS (acrylamide-t-butyl sulfonic acid) manufactured by Aldrich, N,N-methylenebisacrylamide also manufactured by Aldrich, and a polymerization initiator were mixed in pure water at a ratio of 50:49.75:0.025:50 by weight. The PEEK porous film was impregnated with this solution and irradiated with UV rays from an UV light exposure machine manufactured by TGK to perform polymerization within the membrane. As a result of the SEM observation of the surface, the pores were confirmed to be filled with the electrolyte. This demonstrated that the porous film formed according to the present invention can be used as a substrate for an electrolyte membrane for a fuel cell.

### Industrial Applicability

The present invention produces such effects that: (1) a film or sheet substrate having desired physical properties can be used as a reinforcing material; (2) pores with controllable and uniform pore sizes can be formed; and (3) chemical treatment such as surface treatment is unnecessary for immobilizing an electrolyte material on the film or sheet. Therefore, a porous membrane of the present invention can be utilized as a functional membrane in a variety of applications.

Moreover, the present invention can improve the durability of a composite porous membrane, particularly, a solid polymer electrolyte membrane. A fuel cell equipped with the solid polymer electrolyte membrane according to the present invention is highly durable and can have a reduced cross-leak of fuel gas and improved current-voltage characteristics. This enhances the durability and power generation performance of the fuel cell and contributes to practical and widespread use thereof.

## Claims

1. A porous membrane comprising a film or sheet made of a polymer or inorganic material, **characterized by** having a large number of pores of 0.1 to 100 µm in pore size formed by irradiation with an ultra-short pulse laser with a pulse width of 10⁻⁹ seconds or less at an output power of 0.001 to 10 W at focal position.

2. The porous membrane according to claim 1, **characterized in that** the pore size is 0.1 to 10 µm.

3. The porous membrane according to claim 1 or 2, **characterized in that** the porous membrane is a composite porous membrane having the pores that are filled with a polymer electrolyte.

4. The porous membrane according to any of claims 1 to 3, **characterized in that** the porous membrane is made of a polymer or inorganic material.

5. The porous membrane according to claim 4, **characterized in that** the film or sheet made of a polymer material is made of one or more member(s) selected from polyether ether ketone (PEEK), polyethyleneimide (PEI), polysulfone (PSF), polyphenylsulfone (PPSU), polyphenylene sulfide (PPS), and cross-linked polyethylene (CLPE).

6. The porous membrane according to claim 4, **characterized in that** the film or sheet made of a polymer material is made of polytetrafluoroethylene (PTFE) represented by the following general formula (1): 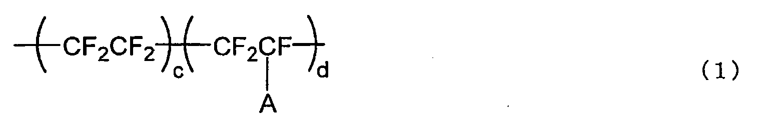 wherein A represents one or more member(s) selected from the formula described below,
A= -CF₃ - OCF₃ - OCF₂CF₂CF₃
and the ratio of the moiety c to the moiety d is c:d=1:0 to 9:1, or a tetrafluoroethylene copolymer comprising 10% by mole or less of a copolymerization component.

7. The porous membrane according to claim 4, **characterized in that** the film or sheet made of a polymer material is made of polysiloxane, and an organic group in the polysiloxane is at least one or more group(s) selected from methyl, phenyl, hydrogen, and hydroxyl groups.

8. The porous membrane according to any of claims 3 to 7, **characterized in that** the polymer electrolyte has a sulfonic acid group.

9. The porous membrane according to any of claims 1 to 8, **characterized in that** the ultra-short pulse laser is a nanosecond, picosecond, or femtosecond pulse laser.

10. A method for producing a porous membrane, **characterized by** irradiating a film or sheet with an ultra-short pulse laser with a pulse width of 10⁻⁹ seconds or less at an output power of 0.001 to 10 W at focal position to form a large number of pores of 0.1 to 100 µm in pore size in the film or sheet.

11. The method for producing a porous membrane according to claim 10, **characterized in that** the pore size is 0.1 to 10 µm.

12. The method for producing a porous membrane according to claim 10 or 11, **characterized by** further comprising filling the pores with an electrolyte-forming monomer and subsequently polymerizing the electrolyte-forming monomer to form a composite porous membrane.

13. The method for producing a porous membrane according to claim 12, **characterized in that** the electrolyte-forming monomer is filled with a cross-linking agent.

14. The method for producing a porous membrane according to claim 12 or 13, **characterized in that** to fill the pores with the electrolyte-forming monomer and optionally with the cross-linking agent, ultrasonication and/or defoaming treatment is performed for infiltration.

15. The method for producing a porous membrane according to any of claims 12 to 14, **characterized in that** the polymerization of the electrolyte-forming monomer is one or more method(s) selected from photopolymerization, thermal polymerization, and catalyst-initiated polymerization.

16. The method for producing a porous membrane according to claim 10 or 11, **characterized by** further comprising filling the pores with a polymer electrolyte to form a composite porous membrane.

17. The method for producing a porous membrane according to claim 16, **characterized in that** the polymer electrolyte is represented by the following general formula (2): 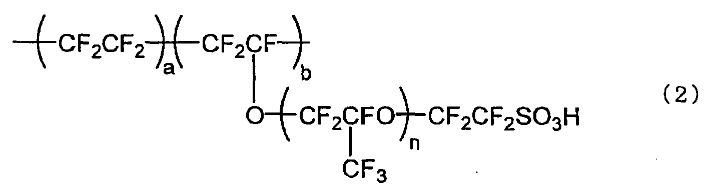 wherein the ratio of the moiety a to the moiety b is a:b=0:1 to 9:1, and n represents 0, 1, or 2.

18. The method for producing a porous membrane according to claim 16 or 17, **characterized in that** to fill the pores with the polymer electrolyte, a polymer electrolyte solution is used, and the solvent is evaporated later.

19. The method for producing a porous membrane according to any of claims 16 to 18, **characterized in that** to fill the pores with the polymer electrolyte, heating and/or pressurization is performed.

20. The method for producing a porous membrane according to any of claims 10 to 19, **characterized in that** the porous membrane is made of a polymer or inorganic material.

21. The method for producing a porous membrane according to any of claims 10 to 20, **characterized in that** the ultra-short pulse laser is a nanosecond, picosecond, or femtosecond pulse laser.

22. The method for producing a porous membrane according to any of claims 10 to 21, **characterized in that** to irradiate the film or sheet with the ultra-short pulse laser with a pulse width of 10⁻⁹ seconds or less, a holographic exposure method is used for regularly punching a large number of pores.

23. A functional membrane comprising a porous membrane according to any of claims 1 to 9.

24. A polymer electrolyte membrane comprising a composite porous membrane according to any of claims 3 to 9.

25. A fuel cell comprising a solid polymer electrolyte membrane according to claim 24.
